# FASCICULE DE BREVET EUROPEEN

(11) **EP 0 988 168 B1**
(45) Date de publication et mention de la délivrance du brevet: **04.12.2002**
(21) Numéro de dépôt: 99913387.9
(22) Date de dépôt: 12.04.1999
(51) Int. Cl.: B60K 15/04, F16K 15/14, F16K 15/16

(54) **CLAPET ANTI-RETOUR POUR RESERVOIR DE CARBURANT**
RÜCKSCHLAGVENTIL FÜR KRAFTSTOFFTANK
NON-RETURN VALVE FOR FUEL TANK

(30) Priorité: 10.04.1998 FR 9804553
(43) Date de publication de la demande: 29.03.2000
(73) Titulaire: COMPAGNIE PLASTIC OMNIUM, 69007 Lyon (FR)
(72) Inventeur: ROSSEEL, Alexis, 60200 Compiègne (FR); BAUDOUX, Patrice, F-02520 Flavy le Martel (FR)
(74) Mandataire: Leszczynski, André
(86) Numéro de dépôt international: FR9900846
(87) Numéro de publication internationale: WO99052731

(56) Documents cités:
- EP-A- 0 674 128
- EP-A- 0 751 024
- US-A- 4 501 374
- US-A- 4 924 923
- US-A- 5 325 979

## Description

La présente invention concerne un clapet anti-retour pour réservoir de carburant.

Un tel clapet est monté dans la tubulure qui sert au remplissage du réservoir, pour d'une part empêcher le carburant présent dans le réservoir d'être refoulé en cas de surpression dans ce dernier, et d'autre part, réduire le risque de fuite en cas d'accident ayant entraîné la rupture de la tubulure.

La demande de brevet EP 0 751 024 décrit un tube de remplissage de réservoir à combustible comportant un corps tubulaire avec à une extrémité un clapet anti-retour.

La présente invention a pour objet un nouveau clapet anti-retour qui soit fiable et de construction relativement peu coûteuse.

Le clapet anti-retour selon l'invention se caractérise par le fait qu'il comporte un corps sensiblement tubulaire et un organe d'obturation déformable, fixé audit corps, cet organe d'obturation étant réalisé d'un seul tenant par moulage de matière plastique pouvant être un élastomère et conformé de manière à revenir par élasticité propre dans une position d'obturation au repos dans laquelle le corps du clapet sert de siège lorsque la pression de carburant n'est plus suffisante pour lutter contre l'action de rappel élastique de l'organe d'obturation.

Dans une réalisation particulière, le corps du clapet est pourvu d'au moins un orifice d'entrée axial et d'au moins un orifice de sortie latéral.

Toujours dans une réalisation particulière, l'organe d'obturation comporte une partie sensiblement rigide constituant obturateur, mobile dans le corps du clapet, et au moins une bande flexible formant ressort pour rappeler ladite partie sensiblement rigide dans la position d'obturation. Cette bande flexible peut s'étendre sensiblement hélicoïdalement ou en zigzag.

Dans une autre réalisation particulière, l'organe d'obturation comporte une partie sensiblement rigide formant obturateur, mobile dans le corps du clapet, et au moins un soufflet formant ressort pour rappeler ladite partie sensiblement rigide dans la position d'obturation. Ce soufflet est avantageusement maintenu en place par un organe de retenue comportant une base encliquetée sur le corps du clapet et un fût ajouré s'étendant à l'intérieur du soufflet.

Dans une autre réalisation particulière, le clapet comporte un corps sensiblement tubulaire muni d'un orifice d'entrée axial et d'un orifice de sortie axial et l'organe d'obturation comporte un volet agencé de manière à obturer l'orifice de sortie au repos volet étant solidaire d'au moins une patte flexible formant ressort, agencée pour le rappeler dans la position d'obturation. De préférence, le volet comporte un prolongement s'articulant sur le corps du clapet.

Dans une autre réalisation particulière, l'organe d'obturation comporte une membrane flexible ayant au repos une forme de calotte dont la concavité est tournée vers la tubulure de remplissage, cette membrane flexible étant fixée par un plot de fixation central au corps du clapet

De préférence, la membrane repose par sa périphérie, au repos, contre une extrémité du corps du clapet.

L'invention sera mieux comprise à la lecture de la description détaillée qui va suivre, de quatre exemples de réalisation non limitatifs de l'invention, et à l'examen du dessin annexé sur lequel :
- la figure 1 est une vue schématique en perspective d'un clapet conforme à un premier exemple de réalisation de l'invention, avec arrachement du corps du clapet montrant la structure de l'organe d'obturation au repos,
- la figure 2 est une vue analogue à la figure 1, représentant le clapet en position d'ouverture,
- la figure 3 est une vue en perspective schématique d'un clapet conforme à un deuxième exemple de réalisation de l'invention, avec arrachement du corps du clapet montrant la structure de l'organe d'obturation en position d'ouverture,
- la figure 4 est une vue analogue à la figure 3, représentant le clapet au repos,
- la figure 5 est une vue en perspective d'une pièce constitutive du clapet représenté sur les figures 3 et 4,
- la figure 6 est une vue schématique, en perspective, d'un clapet conforme à un troisième exemple de réalisation de l'invention, l'organe d'obturation étant en position d'ouverture,
- la figure 7 est une vue schématique, de côté, du clapet représenté sur la figure 6,
- la figure 8 est une vue schématique, en perspective, du clapet représenté sur les figures 6 et 7, au repos,
- la figure 9 est une vue, de côté, du clapet représenté sur la figure 8,
- les figures 10 et 11 sont des vues en perspective, schématiques, représentant deux éléments constitutifs du clapet représenté sur les figures 6 à 9, et
- la figure 12 est une vue schématique en coupe axiale d'un clapet conforme à un quatrième exemple de réalisation de l'invention.

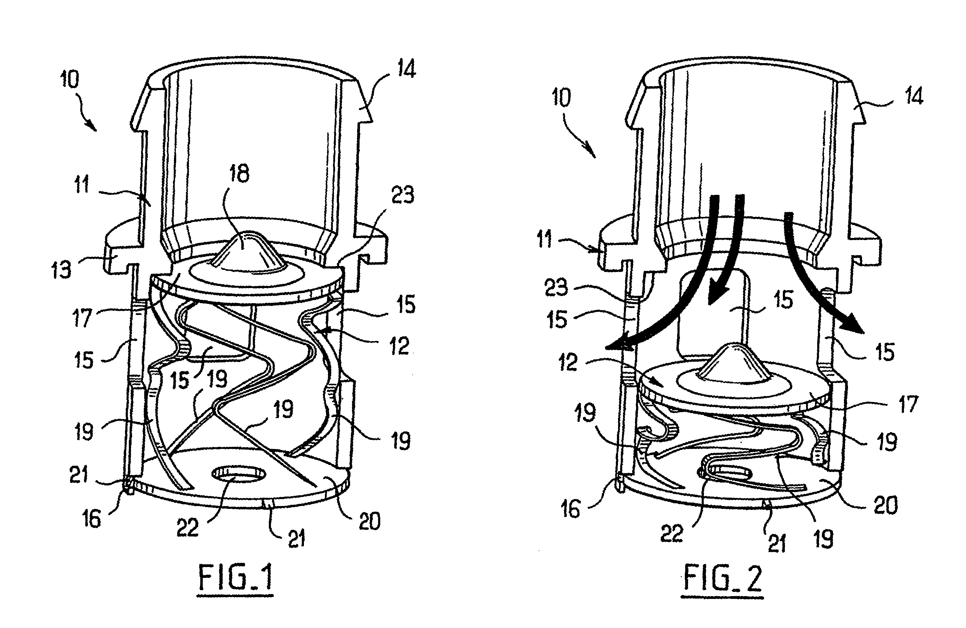

On a représenté sur les figures 1 et 2 un clapet 10 conforme à un premier exemple de réalisation de l'invention.

Ce clapet 10 comporte un corps sensiblement tubulaire 11 en matière plastique rigide et un organe d'obturation 12.

Le corps 11 est pourvu d'une collerette extérieure 13 destinée à la fixation du clapet 10 sur le réservoir.

Le corps 11 constitue à sa partie supérieure, d'un côté de la collerette 13, un embout 14 destiné au raccordement de la tubulure servant au remplissage du réservoir, laquelle est connue en elle-même et non représentée sur le dessin.

Le corps 11 est pourvu de l'autre côté de la collerette 13, c'est-à-dire sur sa partie inférieure destinée à être insérée à l'intérieur du réservoir, d'ouvertures latérales 15, au nombre de quatre dans l'exemple décrit.

Des évidements 16 sont en outre réalisés à proximité du bord inférieur du corps 11 du clapet, pour la fixation de l'organe d'obturation 12, comme cela sera précisé dans la suite.

L'organe d'obturation 12 comporte une partie sensiblement rigide constituant disque obturateur 17, pourvue en son centre d'un cône 18 convergeant en direction de l'embout 14.

Une pluralité de bandes flexibles 19 s'étendent sensiblement en zigzag sous le disque obturateur 17 jusqu'à une platine de fixation 20 pourvue de reliefs 21 encliquetés dans les évidements 16.

La platine de fixation 20 est pourvue, en son centre, d'un orifice 22.

Le disque obturateur 17, la platine de fixation 20 et les bandes flexibles 19 sont réalisées d'un seul tenant par moulage de matière plastique.

Au repos, les bandes flexibles 19 rappellent le disque obturateur 17 contre un épaulement intérieur 23 du corps 11, servant de siège, comme on peut le voir sur la figure 1.

Le clapet 10 est alors en position de fermeture et s'oppose à une remontée de carburant depuis le réservoir par les ouvertures latérales 15 ou l'orifice 22 vers l'embout 14.

Lors du remplissage, sous l'effet de la pression du carburant dans la tubulure de remplissage, le disque obturateur 17 est repoussé vers la platine de fixation 20 à l'intérieur du corps 11, contre l'action de rappel élastique des bandes flexibles 19.

Le carburant peut alors s'écouler au travers des ouvertures latérales 15, comme illustré par les flèches sur la figure 2.

Le cône 18 tend à dévier le flux de carburant vers les ouvertures latérales 15.

Dès que la pression du carburant n'est plus suffisante pour lutter contre l'action de rappel des bandes flexibles 19, le disque obturateur 17 est ramené par ces dernières contre l'épaulement 23 dans la position d'obturation représentée sur la figure 1.

L'orifice 22 vise à éviter que le disque obturateur 17 ne soit gêné dans ses mouvements par un effet de piston à l'intérieur du corps 11.

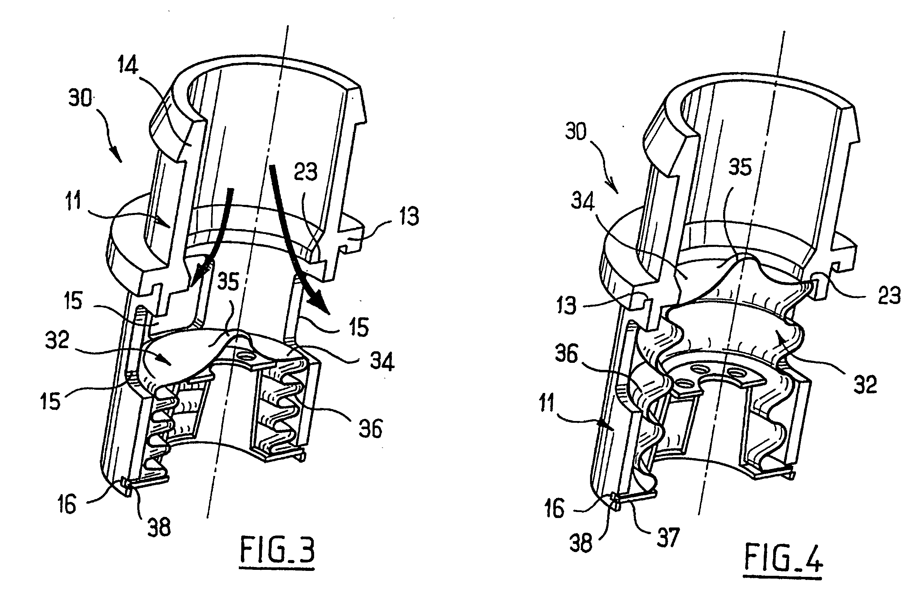

On a représenté sur les figures 3 à 5 un clapet 30 conforme à un deuxième exemple de réalisation de l'invention.

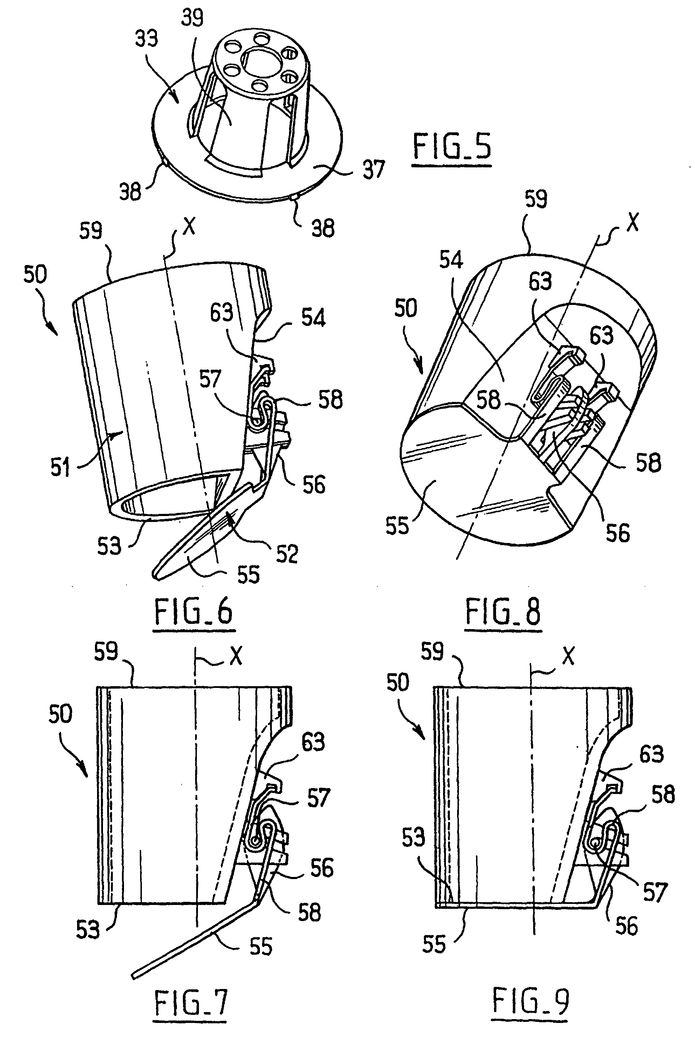

Ce clapet 30 comporte un corps 11 identique à celui du clapet 10 précédemment décrit et un organe d'obturation 32 maintenu en place à l'intérieur du corps 11 par un organe de fixation 33, lequel est représenté isolément sur la figure 5.

L'organe d'obturation 32 comporte une partie sensiblement rigide formant disque obturateur 34, pourvue en son centre d'un cône 35 convergeant vers l'embout 14.

L'organe de fixation 33 comporte une base 37 présentant des reliefs 38 encliquetés dans les évidements 16 du corps 11.

Le disque obturateur 34 est prolongé vers le bas par un soufflet 36 qui prend appui à son extrémité inférieure sur la base 37 de l'organe de fixation 33.

Le disque obturateur 34 et le soufflet 36 sont réalisés d'un seul tenant par moulage d'un élastomère, par exemple un fluoro-silicone.

Au repos, le soufflet 36 garde par mémoire de forme une configuration déployée, laquelle maintient le disque obturateur 34 en butée contre l'épaulement 23 pour fermer le clapet.

Sous l'effet de la pression du carburant à l'intérieur de l'embout 14, le disque obturateur 34 est repoussé vers la base 37, ce qui permet au carburant de s'écouler par les ouvertures latérales 15, comme illustré sur la figure 3.

L'organe de fixation 33 présente un fût 39 ajouré servant à guider, dans une certaine mesure, les mouvements du soufflet 36 et garantir que celui-ci se déforme sans se retourner, avec maintien de l'axe du disque obturateur 34, dans une direction sensiblement parallèle à l'axe du corps 11.

A la fin du remplissage, le soufflet 36 ramène en reprenant sa forme initiale le disque obturateur 34 contre l'épaulement 23 pour fermer le clapet.

On a représenté sur les figures 6 à 11 un clapet 50 conforme à un troisième exemple de réalisation de l'invention.

Ce clapet 50 comporte un corps de clapet 51 en matière plastique rigide et un organe d'obturation 52.

Le corps 51 présente une forme générale cylindrique de révolution, d'axe X, à l'exception d'un renfoncement 54 logeant extérieurement un mécanisme d'articulation de l'organe d'obturation 52, comme cela sera décrit un peu plus loin.

Le corps 51 ne comporte pas d'ouvertures latérales mais seulement des ouvertures axiales, à savoir un orifice d'entrée 59 tourné vers l'amont, c'est-à-dire vers la tubulure de remplissage, et un orifice de sortie 53, cet orifice de sortie 53 situé du côté du réservoir étant de plus petite section que l'orifice d'entrée 59 du fait de la présence du renfoncement 54.

Le clapet 50 peut être monté intégralement à l'intérieur de la tubulure de remplissage.

L'organe d'obturation 52 comporte un volet 55 apte à s'appliquer contre le bord de l'orifice de sortie 53 au repos, comme illustré sur les figures 8 et 9, pour l'obturer.

Le volet 55 comporte sur un côté un prolongement 56 présentant deux ergots 57 s'étendant selon un axe Y, et de part et d'autre du prolongement 56 et des ergots 57 deux pattes flexibles 58.

Chaque patte flexible 58 est repliée deux fois sur elle-même comme représenté sur les figures pour former un ressort de rappel du volet 55 en position d'obturation.

Le clapet 50 comporte, dans le renfoncement 54, deux montants parallèles 60 pourvus chacun d'une fente 61 et deux crochets 63 dont les concavités sont orientées vers les montants 60, les ergots 57 étant destinés à reposer dans le fond des fentes 61 et les extrémités libres des pattes flexibles 58 à s'encliqueter dans les crochets 63, comme illustré sur la figure 9 notamment.

On notera que le montage de l'organe d'obturation 52 s'effectue aisément, et ne nécessite aucun outillage particulier.

Les pattes flexibles 58 ont une forme choisie de telle sorte qu'elles tendent à maintenir le volet 55 à plat contre le bord de l'orifice de sortie 53 pour fermer le clapet.

Sous l'effet de la pression du carburant dans la tubulure de remplissage, le volet 55 est repoussé tandis que les pattes flexibles 58 se déforment élastiquement.

Le volet 55 pivote autour de l'axe Y, perpendiculairement à l'axe X, les ergots 57 tournant dans le fond des fentes 61.

Lorsque la pression du carburant à l'intérieur du corps 51 n'est plus suffisante pour repousser le volet 55, celui-ci se referme sous l'action de rappel des pattes flexibles 58.

Bien entendu, l'invention n'est pas limitée aux exemples de réalisation décrits.

On peut notamment modifier la forme du corps du clapet et de l'organe d'obturation sans sortir du cadre de l'invention.

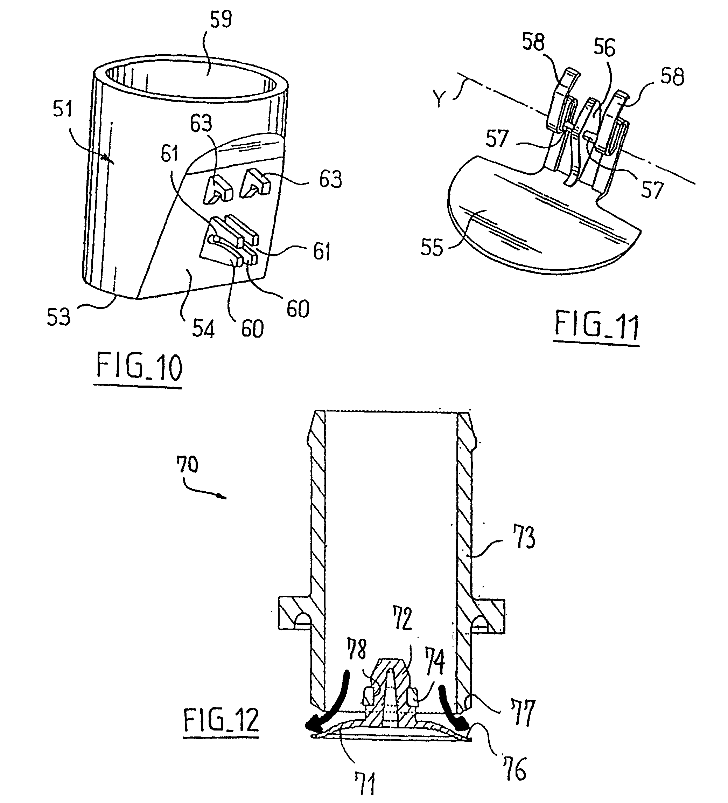

On peut en particulier comme dans le clapet 70 représenté sur la figure 12 réaliser l'organe d'obturation sous la forme d'une membrane flexible 71 ayant au repos une forme de calotte dont la concavité est tournée vers la tubulure de remplissage, cette membrane flexible étant fixée par un plot de fixation central 72 au corps 73 du clapet.

Plus particulièrement, comme on peut le voir sur la figure 12, le plot 72 présente une gorge annulaire 78 encliquetée dans une couronne 74 réalisée d'un seul tenant par moulage de matière plastique avec le reste du corps 73. Le plot 72 est creux pour faciliter son insertion dans la couronne 74. Deux ponts de matière dirigés radialement et diamétralement opposés relient la couronne 74 au reste du corps 73 du clapet.

La membrane 71 est représentée dans la position ouverte qu'elle prend sous l'effet du flux de carburant dans la tubulure de remplissage lors du remplissage du réservoir. Au repos, elle repose par sa périphérie 76 sur l'extrémité 77 du corps 73.

La concavité de la membrane 71 s'inverse par déformation élastique lorsqu'elle passe de sa position de repos à sa position ouverte.

La membrane 71 et le plot 72 sont réalisés d'un seul tenant dans une matière plastique élastomère.

Finalement, un clapet selon l'invention permet, d'une manière fiable et économique,
- d'empêcher le carburant d'être refoulé en cas de surpression dans le réservoir, sans pour autant gêner l'écoulement dans la tubulure de remplissage, et
- d'offrir une fermeture étanche en cas de rupture de la tubulure.

Le clapet selon l'invention présente en outre un encombrement axial relativement faible.

## Revendications

1. Clapet anti-retour (10 ; 30 ; 50 ;70) pour réservoir de carburant, comportant un corps sensiblement tubulaire (11 ; 51 ; 73) et un organe d'obturation déformable (12 ; 32 ; 52 ; 71) fixé audit corps, **caractérisé par le fait que** cet organe d'obturation est réalisé d'un seul tenant par moulage de matière plastique et conformé de manière à revenir par élasticité propre dans une position d'obturation au repos, dans laquelle le corps du clapet sert de siège, lorsque la pression de carburant n'est plus suffisante pour lutter contre l'action de rappel élastique de l'organe d'obturation.

2. Clapet (10 ; 30) selon la revendication 1, **caractérisé par le fait que** le corps (11) du clapet est pourvu d'au moins un orifice d'entrée axial et d'au moins un orifice de sortie latéral (15).

3. Clapet (10) selon la revendication 2, **caractérisé par le fait que** l'organe d'obturation (12) comporte une partie sensiblement rigide constituant obturateur (17), mobile dans le corps du clapet, et au moins une bande flexible (19) formant ressort pour rappeler ladite partie sensiblement rigide dans la position d'obturation.

4. Clapet (10) selon la revendication 3, **caractérisé par le fait que** ladite bande flexible (19) s'étend sensiblement hélicoïdalement ou en zigzag.

5. Clapet (30) selon la revendication 2, **caractérisé par le fait que** l'organe d'obturation (32) comporte une partie sensiblement rigide formant obturateur (34), mobile dans le corps du clapet, et au moins un soufflet (36) formant ressort pour rappeler ladite partie sensiblement rigide dans la position d'obturation.

6. Clapet (30) selon la revendication 5, **caractérisé par le fait que** ledit soufflet (36) est maintenu en place par un organe de retenue (33) comportant une base (37) destinée à être encliquetée sur le corps (11) de clapet et un fût ajouré (39) s'étendant à l'intérieur du soufflet.

7. Clapet (50) selon la revendication 1, **caractérisé par le fait que** le corps du clapet est muni d'un orifice d'entrée axial (59) et d'un orifice de sortie axial (53) et **par le fait que** l'organe d'obturation (52) comporte un volet (55) agencé de manière à obturer l'orifice de sortie (53) au repos, ce volet étant solidaire d'au moins une patte flexible (58) formant ressort pour rappeler le volet dans sa position d'obturation.

8. Clapet (50) selon la revendication 7, **caractérisé par le fait que** le volet (55) comporte un prolongement (56) s'articulant sur le corps (51) du clapet.

9. Clapet (70) selon la revendication 1, **caractérisé par le fait que** l'organe d'obturation se présente sous la forme d'une membrane flexible (71) ayant au repos la forme d'une calotte dont la concavité est tournée vers la tubulure de remplissage, cette membrane flexible étant fixée par un plot (72) de fixation centrale au corps (73) du clapet.

10. Clapet (70) selon la revendication 9, **caractérisé par le fait que** ladite membrane repose par sa périphérie, au repos, contre une extrémité (77) du corps du clapet.

11. Clapet (70) selon l'une des revendications 9 et 10, **caractérisé par le fait que** la membrane (71) et le plot (72) sont réalisés d'un seul tenant dans une matière plastique élastomère.

12. Clapet (70) selon l'une quelconque des revendications 9 à 11, **caractérisé par le fait que** le plot (72) est creux.

13. Clapet (70) selon l'une quelconque des revendications 9 à 12, **caractérisé par le fait que** le plot (72) présente une gorge annulaire (78) encliquetée dans une couronne (74) du corps (73).

14. Clapet selon l'une quelconque des revendications précédentes, **caractérisé par le fait que** le corps du clapet est pourvu d'une collerette extérieure (13) destinée à la fixation du clapet (10) sur le réservoir.

## Patentansprüche

1. Rückschlagventil (10; 30; 50; 70) für einen Kraftstoffbehälter, das ein im wesentlichen rohrförmiges Gehäuse (11; 51; 73) und ein verformbares Schließorgan (12; 32; 52; 71) aufweist, welches mit dem Gehäuse verbunden ist, **dadurch gekennzeichnet, dass** dieses Schließorgan einstückig zusammenhängend während des Formvorgang des Kunststoffmaterials mit hergestellt ist und so ausgebildet ist, dass es in Ruhestellung aufgrund seiner eigenen Elastizität eine Schließstellung einnimmt, in welcher das Gehäuse des Rückschlagventils als Ventilsitz dient, wenn der Druck des Kraftstoffs nicht mehr so groß ist, dass er die elastische Rückstellkraft des Schließorgans überwinden kann.

2. Rückschlagventil (10; 30) nach Anspruch 1, **dadurch gekennzeichnet, dass** das Gehäuse (11) des Rückschlagventils mit mindestens einer axialen Einlassöffnung und mit mindestens einer seitlichen Auslassöffnung (15) versehen ist.

3. Rückschlagventil (10) nach Anspruch 2, **dadurch gekennzeichnet, dass** das Schließorgan (12) einen in wesentlichen steifen Teilbereich, der ein Schließteil (17) ausbildet, das beweglich im Gehäuse des Rückschlagventils angeordnet ist, und zumindest ein flexibles Band (19) aufweist, das eine Feder bildet, um den im wesentlichen steifen Teilbereich in die Schließstellung vorzubelasten.

4. Rückschlagventil (10) nach Anspruch 3, **dadurch gekennzeichnet, dass** das flexible Band (19) sich im wesentlichen schraubenlinienförmig oder zickzackförmig erstreckt.

5. Rückschlagventil (30) nach Anspruch 2, **dadurch gekennzeichnet, dass** das Schließorgan (32) einen im wesentlichen steifen Teilbereich, der ein Schließteil (34) ausbildet, das beweglich im Gehäuse des Rückschlagventils angeordnet ist und mindestens einen Balg (36) aufweist, der eine Feder bildet, um den im wesentlichen steifen Teilbereich in die Schließposition zurückzudrücken.

6. Rückschlagventil (30) nach Anspruch 5, **dadurch gekennzeichnet, dass** dieser Balg (36) an seinem Platz gehalten wird durch ein Rückhaltemittel (33), das eine Basis (37) aufweist, die dazu bestimmt ist, an das Gehäuse (11) des Rückschlagventils angeclipst zu werde n und dass sich ein gelochter Schaft (39) im Inneren dieses Balgs befindet.

7. Rückschlagventil (50) nach Anspruch 1, **dadurch gekennzeichnet, dass** das Gehäuse des Rückschlagventils mit einer axialen Eintrittsöffnung (59) und einer axialen Auslassöffnung (53) versehen ist und dass das Schließorgan (52) eine Klappe (55) aufweist, die so gestaltet ist, dass sie in Ruhestellung die Auslassöffnung (53) verschließt, diese Klappe ist verbunden mit mindestens einem flexiblen Finger (58), der eine Feder bildet, um die Klappe in ihre Schließstellung vorzubelasten.

8. Rückschlagventil (50) nach Anspruch 7, **dadurch gekennzeichnet, dass** die Klappe (55) eine Verlängerung (56) aufweist, die gelenkig am Gehäuse (51) des Rückschlagventils angeordnet ist.

9. Rückschlagventil (70) nach Anspruch 1, **dadurch gekennzeichnet, dass** das Schließorgan in Form einer flexiblen Membran (71) ausgeführt ist, die im Ruhezustand die Form einer Kalotte hat, deren konkave Seite zum Zufuhrrohr gerichtet ist, diese flexible Membran ist mittels eines zentralen Befestigungsstiftes (72) des Gehäuses (73) des Rückschlagventils gehalten.

10. Rückschlagventil (70) nach Anspruch 9, **dadurch gekennzeichnet, dass** die Membran entlang ihrer Peripherie im Ruhezustand an einem Endbereich (77) des Gehäuse des Rückschlagventils anliegt.

11. Rückschlagventil (70) nach einem der Ansprüche 9 und 10, **dadurch gekennzeichnet, dass** die Membran (71) und der Befestigungsstift (72) einstückig zusammenhängend hergestellt sind aus einem elastomeren Kunststoff.

12. Rückschlagventil (70) nach einem beliebigen der Ansprüche 9 bis 11, **dadurch gekennzeichnet, dass** der Befestigungsstift (72) hohl ist.

13. Rückschlagventil (70) nach einem beliebigen der Ansprüche 9 bis 12, **dadurch gekennzeichnet, dass** der Befestigungsstift (72) eine Ringnut (78) aufweist, die in einen Kranz (74) des Gehäuses (73) eingeclipst ist.

14. Rückschlagventil nach einem beliebigen der vorangegangenen Ansprüche, **dadurch gekennzeichnet, dass** das Gehäuse des Rückschlagventils mit einem äußeren Kragen (13) versehen ist, der bestimmt ist für die Befestigung des Rückschlagventils (10) an einem Kraftstofftank.

## Claims

1. Non-return valve (10; 30; 50; 70) for a fuel tank, comprising a roughly tubular body (11; 51; 73) and a deformable shut-off member (12; 32; 52; 71) fixed to the said body, **characterized in that** this shut-off member is made as a single piece by moulding of plastic and shaped in such a way as to return through inherent elasticity to a shut-off position at rest, in which position the body of the valve acts as a seat, when the fuel pressure is no longer high enough to combat the elastic return action of the shut-off member.

2. Valve (10; 30) according to Claim 1, **characterized in that** the body (11) of the valve is provided with at least one axial inlet orifice and at least one lateral outlet orifice (15).

3. Valve (10) according to Claim 2, **characterized in that** the shut-off member (12) comprises a substantially rigid part constituting a shutter (17) able to move in the body of the valve, and at least one flexible strip (19) forming a spring for returning the said substantially rigid part to the shut-off position.

4. Valve (10) according to Claim 3, **characterized in that** the said flexible strip (19) extends roughly in a helix or a zigzag.

5. Valve (30) according to Claim 2, **characterized in that** the shut-off member (32) comprises a substantially rigid part forming a shutter (34) able to move in the body of the valve, and at least one bellows (36) forming a spring for returning the said substantially rigid part to the shut-off position.

6. Valve (30) according to Claim 5, **characterized in that** the said bellows (36) is held in place by a retaining member (33) comprising a base (37) intended to be clipped to the valve body (11) and a perforated barrel (39) extending inside the bellows.

7. Valve (50) according to Claim 1, **characterized in that** the body of the valve is provided with an axial inlet orifice (59) and an axial outlet orifice (53) and **in that** the shut-off member (52) comprises a flap (55) designed to shut off the outlet orifice (53) at rest, this flap being secured to at least one flexible tab (58) forming a spring for returning the flap to its shut-off position.

8. Valve (50) according to Claim 7, **characterized in that** the flap (55) has an extension (56) articulated to the body (51) of the valve.

9. Valve (70) according to Claim 1, **characterized in that** the shut-off member is in the form of a flexible diaphragm (71) which, at rest, has the shape of a cap the concave side of which faces towards the filling pipe, this flexible diaphragm being fixed by a central fixing stud (72) to the body (73) of the valve.

10. Valve (70) according to Claim 9, **characterized in that** the said diaphragm rests via its periphery, at rest, against an end (77) of the body of the valve.

11. Valve (70) according to either of Claims 9 and 10, **characterized in that** the diaphragm (71) and the stud (72) are made in one piece of an elastomer plastic.

12. Valve (70) according to any one of Claims 9 to 11, **characterized in that** the stud (72) is hollow.

13. Valve (70) according to any one of Claims 9 to 12, **characterized in that** the stud (72) has an annular groove (78) clipped into a ring (74) belonging to the body (73).

14. Valve according to any one of the preceding claims, **characterized in that** the body of the valve is provided with an external collar (13) intended for securing the valve (10) to the tank.
